(19) Europäisches Patentamt
European Patent Office
Office européen des brevets

(11) EP 1 879 341 A2

(12) EUROPEAN PATENT APPLICATION

(43) Date of publication:
16.01.2008 Bulletin 2008/03

(51) Int Cl.:
*H04L 25/02* (2006.01)

(21) Application number: 07251612.3

(22) Date of filing: 17.04.2007

(84) Designated Contracting States:
AT BE BG CH CY CZ DE DK EE ES FI FR GB GR
HU IE IS IT LI LT LU LV MC MT NL PL PT RO SE
SI SK TR
Designated Extension States:
AL BA HR MK YU

(30) Priority: 14.07.2006 GB 0614088

(71) Applicant: Kabushiki Kaisha Toshiba
Minato-ku,
Tokyo 105-8001 (JP)

(72) Inventor: Sandell, Magnus Stig Torsten
Bristol BS1 4ND (GB)

(74) Representative: Round, Edward Mark
Marks & Clerk
90 Long Acre
London WC2E 9RA (GB)

(54) **Lattice-Reduction-Aided detection applying a modified Lenstra-Lenstra-Lovasz (LLL) algorithm**

(57) In a wireless communications system, an inverse of a lattice reduction matrix can be obtained at the same time as performance of the LLL algorithm to determine the lattice reduction. This is achieved by interposing in the LLL algorithm corresponding steps applied to a running calculation of the inverse matrix. Similarly, a row-wise sum of the inverse matrix can be calculated, if this is all that is required in subsequent processing.

Fig. 3

EP 1 879 341 A2

**Description**

The present invention is in the field of wireless communication, and particularly, but not exclusively, the field of multiple input, multiple output (MIMO) communications systems.

Conventional communication systems can be represented mathematically as:

$$\mathbf{y} = \mathbf{Hx} + \mathbf{v}$$

in which, for a MIMO communication system, $\mathbf{y}$ is an $n$-by-1 vector representing the received signal, $\mathbf{H}$ is an $n$-by-$m$ channel matrix modelling the transmission characteristics of the communications channel, $\mathbf{x}$ is an $m$-by-1 vector representing transmit symbols, $\mathbf{v}$ is an $n$-by-1 noise vector and wherein $m$ and $n$ denote the number of transmit and receive antennas respectively.

It will be understood by the skilled reader that the same representation can be used for multi-user detection in CDMA systems.

Recent publications have demonstrated how the use of a technique called Lattice Reduction can improve the performance of MIMO detection methods.

For example, "Lattice-Reduction-Aided Detectors for MIMO Communication Systems", (H. Yao and G.W. Wornell, Proc. IEEE Globecom, Nov 2002, pp. 424-428) describes Lattice-reduction (LR) techniques for enhancing the performance of multiple-input multiple-output (MIMO) digital communication systems.

In addition, "Low-Complexity Near-Maximum-Likelihood Detection and Precoding for MIMO Systems using Lattice Reduction", (C. Windpassinger and R. Fischer, in Proc. IEEE Information Theory Workshop, Paris, March, 2003, pp. 346-348) studies the lattice-reduction-aided detection scheme proposed by Yao and Wornell. It extends this with the use of the well-known LLL algorithm, which enables the application to MIMO systems with arbitrary numbers of dimensions.

"Lattice-Reduction-Aided Receivers for MIMO-OFDM in Spatial Multiplexing Systems", (I. Berenguer, J. Adeane, I. Wassell and X. Wang, in Proc. Int. Symp. on Personal Indoor and Mobile Radio Communications, Sept. 2004, pp. 1517-1521, hereinafter referred to as "Berenguer et al.") describes the use of Orthogonal Frequency Division Multiplexing (OFDM) to significantly reduce receiver complexity in wireless systems with Multipath propagation, and notes its proposed use in wireless broadband multi-antenna (MIMO) systems.

Finally, "MMSE-Based Lattice-Reduction for Near-ML Detection of MIMO Systems", (D. Wubben, R. Bohnke, V. Kuhn and K. Kammeyer, in Proc. ITG Workshop on Smart Antennas, 2004, hereinafter referred to as "Wubben et al.") adopts the lattice-reduction aided schemes described above to the MMSE criterion.

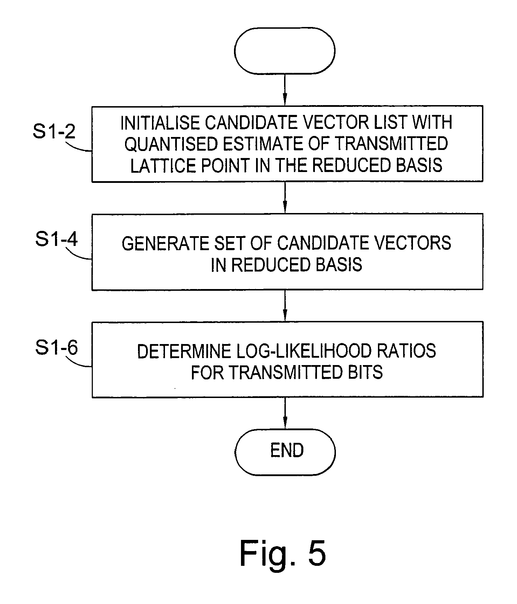

The techniques used in the publications described above use the concept that mathematically, the columns of the channel matrix, $\mathbf{H}$ (which describes the propagation environment between the transmit and receive antennas) can be viewed as describing the basis of a lattice. An equivalent description of this lattice (a so-called 'reduced basis') can therefore be calculated so that the basis vectors are close to orthogonal. If the receiver then uses this reduced basis to equalise the channel, noise enhancement can be kept to a minimum and detection performance will be improved (such as, as illustrated in Figure 5 in Wubben et al.) relative to a non-lattice aided linear detector or pre-coder.

This process comprises the steps described as follows:

$\mathbf{y}_r$, $\mathbf{x}$, and $\mathbf{H}$, are defined to be the real-valued representations of y, x, and H respectively, such that:

$$\mathbf{y}_r = \begin{bmatrix} \mathrm{Re}(\mathbf{y}) \\ \mathrm{Im}(\mathbf{y}) \end{bmatrix}, \quad \mathbf{x}_r = \begin{bmatrix} \mathrm{Re}(\mathbf{x}) \\ \mathrm{Im}(\mathbf{x}) \end{bmatrix}, \quad \mathbf{H}_r = \begin{bmatrix} \mathrm{Re}(\mathbf{H}) & -\mathrm{Im}(\mathbf{H}) \\ \mathrm{Im}(\mathbf{H}) & \mathrm{Re}(\mathbf{H}) \end{bmatrix}$$

where Re() and Im() denote the real and imaginary components of their arguments.

It will be noted that Berenguer et al. describes the equivalent method in the complex plane, though for the purpose of clarity the Real axis representation of the method is used herein. However, it will be appreciated by the reader that any algorithm, real or complex, can be used to perform lattice reduction. To this end, a number of lattice reduction algorithms exist in the art. Any one of these lattice reduction algorithms can be used to calculate a transformation matrix, $\mathbf{T}$, such that a reduced basis, $\tilde{\mathbf{H}}_r$, is given by

$$\tilde{\mathbf{H}}_r = \mathbf{H}_r \mathbf{T}$$

The matrix **T** contains only integer entries and its determinant is +/-1.

One suitable lattice reduction algorithm is the Lenstra-Lenstra-Lovasz (LLL) algorithm referred to above, which is disclosed in Wubben et al., and also in "Factoring Polynomials with Rational Coefficients", (A. Lenstra, H. Lenstra and L. Lovasz, Math Ann., Vol. 261, pp. 515-534, 1982, hereinafter referred to as "Lenstra et al."), and in "An Algorithmic Theory of Numbers, Graphs and Convexity", (L. Lovasz, Philadelpia, SIAM, 1980, hereinafter referred to as "Lovasz").

Lattice reduction re-expresses the mathematical description of the communications system as:

$$\mathbf{y}_r = \mathbf{H}_r \mathbf{x}_r + \mathbf{v}_r$$
$$= \mathbf{H}_r \mathbf{T} \mathbf{T}^{-1} \mathbf{x}_r + \mathbf{v}_r$$
$$= \tilde{\mathbf{H}}_r \mathbf{T}^{-1} \mathbf{x}_r + \mathbf{v}_r$$
$$= \tilde{\mathbf{H}}_r \mathbf{z} + \mathbf{v}_r$$

where $\mathbf{z}_r = \mathbf{T}^{-1} \mathbf{x}_r$. The received signal, $\mathbf{y}_r$, in this redefined system is then equalised to obtain an estimate of $\mathbf{z}_r$. This equalisation process then employs, for example, a linear zero forcing (ZF) technique, which obtains:

$$\tilde{\mathbf{z}}_r = (\tilde{\mathbf{H}}_r^* \tilde{\mathbf{H}}_r)^{-1} \tilde{\mathbf{H}}_r^* \mathbf{y}_r$$

Since $\tilde{\mathbf{H}}_r$ is close to orthogonal, $\tilde{\mathbf{z}}_r$ should suffer much less noise enhancement than if the receiver directly equalised the channel $\mathbf{H}_r$.

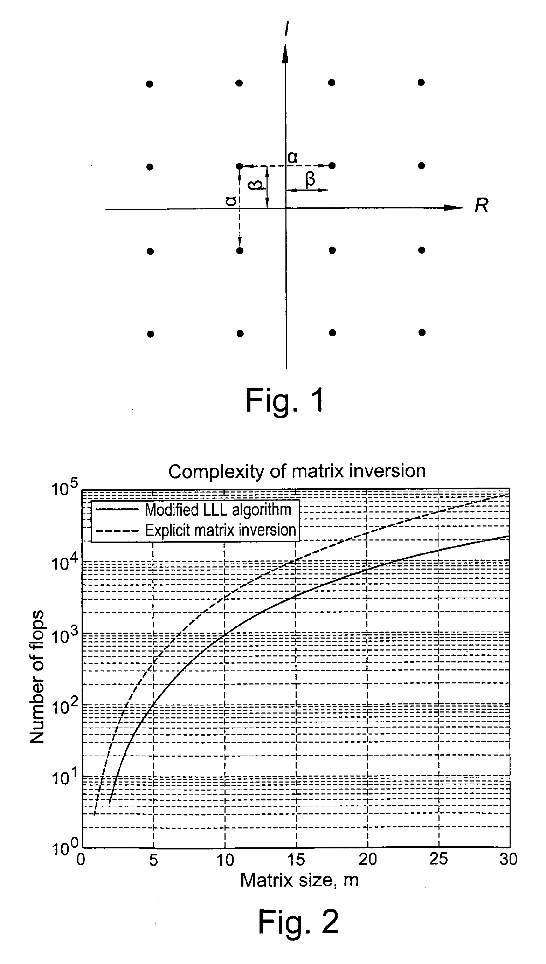

Assuming that the transmitted symbols contained in **x** are obtained from an M-QAM constellation then $\mathbf{x}_r$ can be formed as

$$x_r = \alpha s + \beta$$

where s is taken from the set of integers (limited by the dimension of the constellation) and $\alpha$ and $\beta$ are scalar values. Figure 1 illustrates this, showing that $\alpha$ defines the minimum distance between two adjacent constellation points and $\beta$ is the offset from the origin when s=0.

The equalised signal, $\tilde{\mathbf{z}}_r$, can then be quantised by transformation thereof to an integer lattice. This uses a shifting and scaling operation, as follows:

$$\hat{\mathbf{z}}_r = \alpha Q \left\{ \frac{1}{\alpha} \left( \tilde{\mathbf{z}}_r - \mathbf{T}^{-1} \mathbf{1} \beta \right) \right\} + \mathbf{T}^{-1} \mathbf{1} \beta$$

where Q{} is the quantisation function that rounds each element of its argument to the nearest integer, and where 1 is a column vector of ones. Apart from this quantisation function apart, the remaining operations are a result of M-QAM constellations being scaled and translated versions of the integer lattice. The integer quantisation therefore requires the same simple scaling and translation operations.

To obtain soft information, i.e. Log Likelihood Ratios (LLRs), the technique described in UK Patent Application 0518036.0 may be used, as briefly described below.

As an input this approach takes the quantised estimate of the transmitted lattice point in the reduced basis, $\tilde{\mathbf{z}}_r$, as defined above.

In a first step, the vector $\tilde{\mathbf{z}}_r$ is treated as the first entry in a list of candidate vectors. Other candidate vectors are then obtained by modifying one or more elements of the vector $\tilde{\mathbf{z}}_r$ and adding these as new candidate vectors to the list.

Whilst any of these additional candidate vectors may differ from $\tilde{\mathbf{z}}_r$ in more than one element, this approach generates candidates by only ever allowing these to vary one element of $\tilde{\mathbf{z}}_r$. The $i^{th}$ candidate vector in this list is defined as $\mathbf{c}^{(i)}$, and hence $\mathbf{c}^{(1)} = \tilde{\mathbf{z}}_r$.

A simple and effective way (but not the only way) of generating a list of candidates is to perturb each element of $\tilde{\mathbf{z}}_r$ in turn by $+/-a$ (where $a$ is the minimum distance between 2 constellation points). For example, if $\tilde{\mathbf{z}}_r$ is a 2-by-1 vector, then there would be 4 additional candidate vectors, giving a total of 5 candidates as follows:

$$\mathbf{c}^{(1)} = \begin{bmatrix} \hat{z}_{r1} \\ \hat{z}_{r2} \end{bmatrix}, \quad \mathbf{c}^{(2)} = \begin{bmatrix} \hat{z}_{r1} + a \\ \hat{z}_{r2} \end{bmatrix}, \quad \mathbf{c}^{(3)} = \begin{bmatrix} \hat{z}_{r1} - a \\ \hat{z}_{r2} \end{bmatrix},$$

$$\mathbf{c}^{(4)} = \begin{bmatrix} \hat{z}_{r1} \\ \hat{z}_{r2} + a \end{bmatrix}, \quad \mathbf{c}^{(5)} = \begin{bmatrix} \hat{z}_{r1} \\ \hat{z}_{r2} - a \end{bmatrix}.$$

The effect of perturbing elements of $\tilde{\mathbf{z}}_r$ is to generate other points in the reduced lattice. The perturbations by $+/-a$, give the closest points in the lattice as $a$ is the distance between any two neighbouring points.

An alternative implementation may involve increasing the list of candidates through perturbing elements of $\tilde{\mathbf{z}}_r$ by multiples of $a$ (i.e. to not just the closest point, but the closest few points), and/or by perturbing multiple elements of $\tilde{\mathbf{z}}_r$ simultaneously rather than just one element at a time.

Just as for a hard-output detector, occasionally it is possible that some of the elements of the vector $\hat{\mathbf{x}}_r^{(i)}$ may not be valid symbols. In such cases these symbols are mapped to the nearest valid symbol. For example, for 16-QAM, if the values $+/-1$, $+/-3$ define the valid entries, then if an element were equal to $+5$, this would be mapped to a value of $+3$.

For each candidate symbol vector $\hat{\mathbf{x}}_r^{(i)}$ its probability of being transmitted is calculated as:

$$p^{(i)} = \frac{1}{\sqrt{\pi \sigma_v^2}} \exp\left( \frac{-\left\| \mathbf{y}_r - \mathbf{H}_r \hat{\mathbf{x}}_r^{(i)} \right\|}{\sigma_v^2} \right)$$

These probabilities are then used to calculate the probability of symbol $x'$ having been transmitted from antenna k, where $x' \in X$ and $X$ defines the set of symbols in the chosen constellation:

$$P(k, x') = \sum_{\{i | \hat{x}_k^{(i)} = x'\}} p^{(i)} \qquad \text{for } k = 1, \ldots, m \text{ and } x' \in X$$

Depending on the list of candidates, according to the above definition P may not be specified for all values of k and $x'$. In these cases P is set to a default (small) value. This default can be a fixed value or it could varied according to a method such as that described in "Adaptive Selection of Surviving Symbol Replica Candidates Based on Maximum Reliability in QRM-MLD for OFCDM MIMO Multiplexing" (K. Higuchi, H. Kawai, N. Maeda and M. Sawahashi, in Proc. IEEE Globecom, Dallas, Dec. 2004), or by any other appropriate method.

Now that the receiver has information on the probability of different symbols having been transmitted, these can be processed in the conventional way to obtain, for instance, a log-likelihood ratio for each transmitted bit. This can be done as follows:

$$L(b_{k,i}) = \log\left(\frac{\sum\limits_{x' \in X^{(1)}} P(k,x')}{\sum\limits_{x'' \in X^{(0)}} P(k,x'')}\right)$$

where:

$L(b_{k,i})$ is the log-likelihood ratio of bit $b_{k,i}$,

k indicates the transmit antenna,

$i=1,...,M$ where $M$ is the number of bits per symbol, and

X(1) and X(0) are the sets of symbols for which $b_{k,I}= 1$ and $b_{k,I}= 0$ respectively.

When using lattice reduction in, for instance, MIMO decoding or precoding, it is not only the lattice reduction matrix T that is needed, but also its inverse $T^{-1}$. The LLL algorithm does not provide $T^{-1}$, so this must be computed afterwards. This involves an explicit matrix inversion once the lattice reduction matrix $T$ has been found.

In fact, the MIMO decoder described above doesn't actually need the matrix $T^{-1}$ but instead requires only the product $T^{-1}$ **1**. Hence it is desirable to provide a decoder invoking a modified LLL algorithm which can thus provide either (or both) of these variables.

A first aspect of the invention provides a method of decoding a received signal in a wireless communications system, the method comprising obtaining an estimate of channel response in said system, applying lattice reduction to said channel response, and applying equalisation of said received signal in accordance with the reduced basis channel, the step of applying lattice reduction being in accordance with the LLL algorithm and including, in each operation of the lattice reduction step in accordance with the LLL algorithm, determining a lattice reduction inverse by derivation from an initial condition or a previous operation of the lattice reduction step.

The step of determining a lattice reduction inverse may include the step of initialising a calculation matrix to an identity matrix and processing said calculation matrix in correspondence with processing of said lattice reduction step so as to mirror processing of a matrix representing the lattice reduction, so as to generate an inverse thereof.

The step of processing said calculation matrix in correspondence with processing of said lattice reduction step may comprise linear combination of rows in correspondence with linear combination of columns in the LLL algorithm, and/or swapping rows in correspondence with swapping columns in the LLL algorithm.

In each operation of the lattice reduction step in accordance with the LLL algorithm, the method may comprise determining a row-wise sum of a lattice reduction inverse by derivation from an initial condition or a previous operation of the lattice reduction step.

According to a second aspect of the invention, there is provided a method of decoding a received signal in a wireless communications system, the method comprising obtaining an estimate of channel response in said system, applying lattice reduction to said channel response and applying equalisation of said received signal in accordance with the reduced basis channel, the step of applying lattice reduction being in accordance with the LLL algorithm and including, in each operation of the lattice reduction step in accordance with the LLL algorithm, determining a row-wise sum of a lattice reduction inverse by derivation from an initial condition or a previous operation of the lattice reduction step.

The method may comprise determining a row-wise sum of a lattice reduction inverse includes the step of initialising a calculation vector and processing said calculation vector in correspondence with processing of said lattice reduction step, said processed calculation vector thereby resulting in said row-wise sum.

The step of processing said calculation vector in correspondence with processing of said lattice reduction step may comprise linear combination of elements of said vector in correspondence with linear combination of columns in the LLL algorithm, and/or swapping elements of said calculation vector in correspondence with swapping columns in the LLL algorithm.

There is further provided a method of determining soft estimates of transmitted bit values from a received signal in a lattice reduction aided receiver, the method comprising decoding said signal in accordance with any preceding aspect of the invention and determining probabilities of transmitted bits having particular values.

The invention may also be provided by computer implemented means, such as software configuring a general purpose communications configured computer apparatus, or more application specific apparatus such as an ASIC, an FPGA or a DSP. To this end, the invention may be embodied in a software product, which may be delivered on computer readable storage media, such as optical or magnetic media or flash memory storage media, or by means of a computer receivable signal, such as a downloaded file or collection of files. No part of the following description of specific embodiments of the invention should be interpreted as a limitation on the scope of application of the invention, as the embodiments so described are provided by way of example only, with reference to the accompanying drawings, in which:

Figure 1 illustrates a graph of a standard constellation illustrating the dimension and nature of perturbations;

Figure 2 illustrates a graph of performance of an implementation of a specific embodiment of the invention in comparison with a prior art example described above;

Figure 3 illustrates schematically a MIMO system including a transmitter and a receiver;

Figure 4 illustrates in further detail the receiver of figure 3; and

Figure 5 illustrates a detecting method operable by means of the detector illustrated in figure 4.

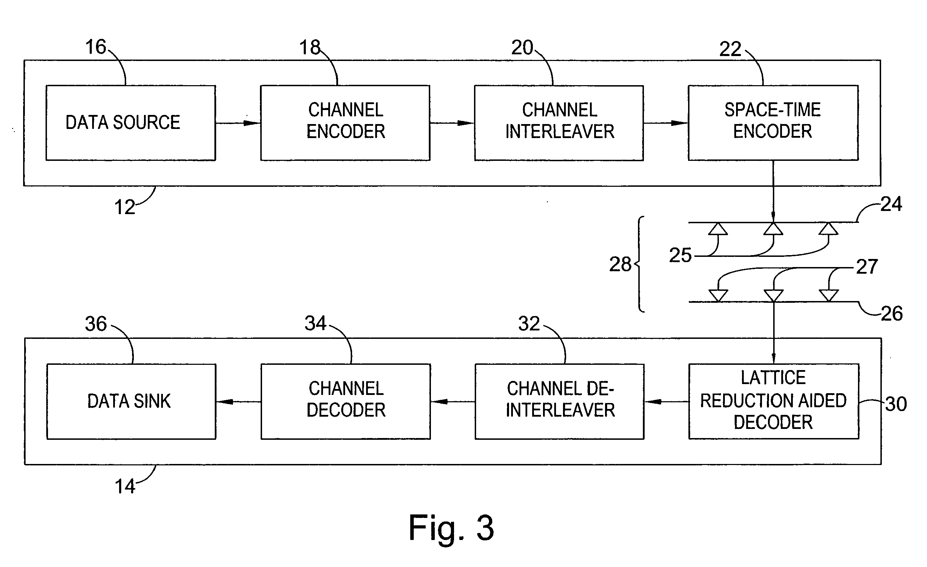

The present invention will now be described with reference to an implementation thereof for the equalization of a wireless communication system. Figure 3 illustrates such a system, comprising a MIMO data communications system 10 of generally known construction. New components, in accordance with a specific embodiment of the invention, will be evident from the following description.

The communications system 10 comprises a transmitter device 12 and a receiver device 14. It will be appreciated that in many circumstances, a wireless communications device will be provided with the facilities of a transmitter and a receiver in combination but, for this example, the devices have been illustrated as one way communications devices for reasons of simplicity.

The transmitter device 12 comprises a data source 16, which provides data (comprising information bits or symbols) to a channel encoder 18. The channel encoder 18 is followed by a channel interleaver 20 and, in the illustrated example, a space-time encoder 22. The space-time encoder 22 encodes an incoming symbol or symbols as a plurality of code symbols for simultaneous transmission from a transmitter antenna array 24 comprising a plurality of transmit antennas 25. In this illustrated example, three transmit antennas 25 are provided, though practical implementations may include more, or less antennas depending on the application.

The encoded transmitted signals propagate through a MIMO channel 28 defined between the transmit antenna array 24 and a corresponding receive antenna array 26 of the receiver device 14. The receive antenna array 26 comprises a plurality of receive antennas 27 which provide a plurality of inputs to a lattice-reduction-aided decoder 30 of the receiver device 14. In this specific embodiment, the receive antenna array 26 comprises three receive antennas 27.

The lattice-reduction-aided decoder 30 has the task of removing the effect of the MIMO channel 28. The output of the lattice-reduction-aided decoder 30 comprises a plurality of signal streams, one for each transmit antenna 25, each carrying so-called soft or likelihood data on the probability of a transmitted bit having a particular value. This data is provided to a channel de-interleaver 32 which reverses the effect of the channel interleaver 20, and the de-interleaved bits output by this channel de-interleaver 32 are then presented to a channel decoder 34, in this example a Viterbi decoder, which decodes the convolutional code. The output of channel decoder 34 is provided to a data sink 36, for further processing of the data in any desired manner.

The specific function of the lattice-reduction-aided decoder 30 will be described in due course.

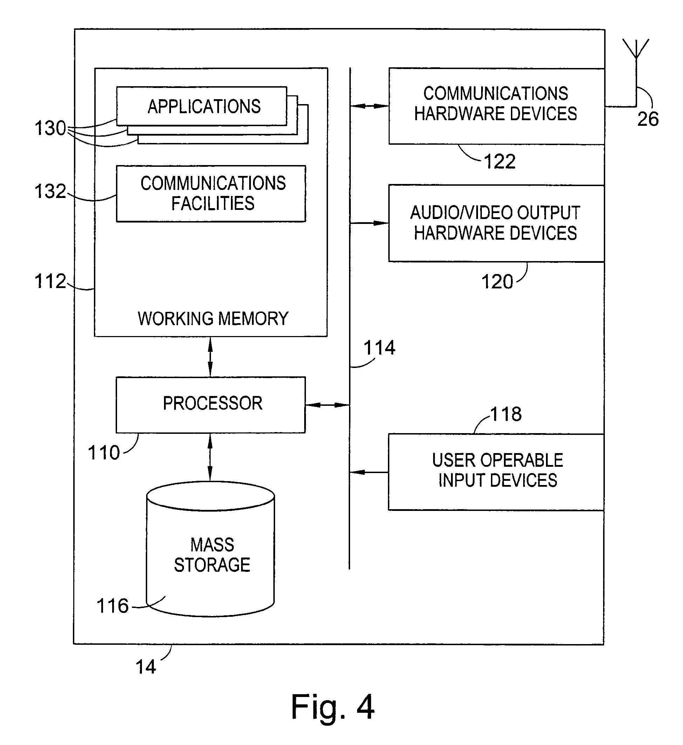

Figure 4 illustrates schematically hardware operably configured (by means of software or application specific hardware components) as the receiver device 16. The receiver device 16 comprises a processor 110 operable to execute machine code instructions stored in a working memory 112 and/or retrievable from a mass storage device 116. By means of a general purpose bus 114, user operable input devices 118 are capable of communication with the processor 110. The user operable input devices 118 comprise, in this example, a keyboard and a mouse though it will be appreciated that any other input devices could also or alternatively be provided, such as another type of pointing device, a writing tablet, speech recognition means, or any other means by which a user input action can be interpreted and converted into data signals.

Audio/video output hardware devices 120 are further connected to the general purpose bus 114, for the output of information to a user. Audio/video output hardware devices 120 can include a visual display unit, a speaker or any other device capable of presenting information to a user.

Communications hardware devices 122, connected to the general purpose bus 114, are connected to the antenna 26. In the illustrated embodiment in Figure 4, the working memory 112 stores user applications 130 which, when executed by the processor 110, cause the establishment of a user interface to enable communication of data to and from a user. The applications in this embodiment establish general purpose or specific computer implemented utilities that might habitually be used by a user.

Communications facilities 132 in accordance with the specific embodiment are also stored in the working memory 112, for establishing a communications protocol to enable data generated in the execution of one of the applications 130 to be processed and then passed to the communications hardware devices 122 for transmission and communication with another communications device. It will be understood that the software defining the applications 130 and the communications facilities 132 may be partly stored in the working memory 112 and the mass storage device 116, for convenience. A memory manager could optionally be provided to enable this to be managed effectively, to take account of the possible different speeds of access to data stored in the working memory 112 and the mass storage device 116.

On execution by the processor 110 of processor executable instructions corresponding with the communications facilities 132, the processor 110 is operable to establish communication with another device in accordance with a recognised communications protocol.

The function of the lattice-reduction aided decoder 30 will now be described in further detail in accordance with figure 5. In step S1-2, this employs a modified LLL algorithm to convert the input channel matrix into a reduced basis.

For ease of reference, and to demonstrate the difference between operation of the altrrice reduction aided decoder 30 with regard to prior art examples, the LLL algorithm as described in Wubben et al. is set out below, in step form. This algorithm operates on a QR decomposition of the $m \times n$ channel matrix, $H = QR$, hence:

INPUT: **Q, R, P** (default **P = I$_m$**)

OUTPUT: $\widetilde{\mathbf{Q}}, \widetilde{\mathbf{R}}, \mathbf{T}$

(1) Initialisation: $\widetilde{\mathbf{Q}} = \mathbf{Q}$, $\widetilde{\mathbf{R}} = \mathbf{R}$, $\mathbf{T} = \mathbf{P}$
(2) k=2
(3) while $k \leq m$
(4) for $l=k-1,\cdots,1$
(5) $\mu=\langle \widetilde{R}(l,k)/\widetilde{R}(l,l)\rangle$
(6) if $\mu \neq 0$
(7) $\widetilde{R}(1:l,k)=(1:l,k)-\mu\widetilde{R}(1:l,l)$
(8) $T(:,k)=T(:,k)-\mu T(:.l)$
(9) end
(10) end
(11) if $\delta\widetilde{R}(k-1,k-1)^2 > \widetilde{R}(k,k)^2 + \widetilde{R}(k-1,k)^2$
(12) swap columns $k-1$ and $k$ in $\widetilde{R}$ and $T$
(13) calculate Givens rotation matrix $\Theta$ such that element $\widetilde{R}(k,k-1)$ becomes zero:

$$\Theta = \begin{pmatrix} a & b \\ -b & a \end{pmatrix} \text{with} \quad \begin{aligned} a &= \frac{\widetilde{R}(k-1,k-1)}{\left\|\widetilde{R}(k-1:k,k-1)\right\|} \\ b &= \frac{\widetilde{R}(k,k-1)}{\left\|\widetilde{R}(k-1:k,k-1)\right\|} \end{aligned}$$

(14) $\widetilde{R}(k-1:k,k-1:m)=\Theta\widetilde{R}(k-1:k,k-1:m)$
(15) $\widetilde{R}(:,k-1:k)=\widetilde{R}(:,k-1:k)\Theta^T$
(16) $k = \max\{k-1,2\}$
(17) else
(18) $k=k+1$
(19) end
(20) end

Note that $\delta = 3/4$ in Wubben et al. and that $\langle x \rangle$ denotes the nearest integer to $x$.

The LLL algorithm as set out above operates by either replacing columns of the channel matrix with a linear combinations of columns (line 8) or by swapping columns (line 12).

In this described embodiment of the present invention, it is also desired to compute the inverse $V = T^{-1}$ and/or its row-wise sum $T^{-1}1$. In this case, therefore, the LLL algorithm as described above is modified by adding the following operations:

(1a) initialise $V = P^{-1}$ and $s = V\mathbf{1}$, i.e., $s_j = \sum_{i=1}^{m} V_{ji}$

(8a) $V(l,:) = \mu V(k,:) + V(l,:)$ $s_l = \mu s_k + s_l$

(12a) swap rows k-1 and k in $V$ and elements k-1 and k in $s$

These steps follow steps (1), (8) and (12) respectively. It will be noted that $P^{-1}$ is trivial if $P$ is chosen as the identity matrix or the output of a previous call to the modified LLL algorithm (in which case the inverse would already have been calculated). The algorithm in accordance with the specific embodiment of the invention will now produce the lattice reduction inverse $V = T^{-1}$ and its row-wise sum $s = T^{-1}\mathbf{1}$ without the need for an explicit matrix inversion. It will be noted that V and s are independent in the sense that they can be computed individually. Hence, if only one of them is sought, the other one does not have to be computed.

Then, for the reduced basis determined in this way, a set of candidate vectors in the reduced lattice is determined, in step S1-4. For the purpose of this description of a specific embodiment, the method of generating a list of candidates described in the introduction, perturbing each element of $\hat{\mathbf{z}}_r$ in turn, is used.

Once a list of candidate vectors in the reduced lattice has been obtained then, in step S1-6, log likelihood ratios $L(b_{k,i})$ are derived as set out in the introduction to the field of the invention, detailed above.

The graph of figure 2 sets out experimental performance data of the present method in comparison with prior art decoding methods aiming to provide hard information for the channel decoder. Figure 2 demonstrates the benefit that can be obtained by providing a lattice reduction detection scheme to output soft information for the channel decoder.

It will be appreciated that the foregoing disclosure of specific embodiments of the invention can be applied to any communications product employing MIMO transmission techniques, to take advantage of the benefits of the invention. Further, the invention is applicable to any circumstance in which the detection of symbols which may be based on multiple input is required. This could arise in systems where a plurality of antennas are provided in separate locations. Further, CDMA MUD may be a suitable basis for use of the method of the present invention.

The invention has been described by way of a software implementation. This software implementation can be introduced as a stand alone software product, such as borne on a storage medium, e.g. an optical disk, or by means of a signal. Further, the implementation could be by means of an upgrade or plug-in to existing software.

Whereas the invention can be so provided, it could also be by way exclusively by hardware, such as on an ASIC.

The reader will appreciate that the foregoing is but one example of implementation of the present invention, and that further aspects, features, variations and advantages may arise from using the invention in different embodiments. The scope of protection is intended to be provided by the claims appended hereto, which are to be interpreted in the light of the description with reference to the drawings and not to be limited thereby.

## Claims

1. A method of decoding a received signal in a wireless communications system, the method comprising obtaining an estimate of channel response in said system, applying lattice reduction to said channel response, and applying equalisation of said received signal in accordance with the reduced basis channel, the step of applying lattice reduction being in accordance with the LLL algorithm and including, in each operation of the lattice reduction step in accordance with the LLL algorithm, determining a lattice reduction inverse by derivation from an initial condition or a previous operation of the lattice reduction step.

2. A method in accordance with claim 1 wherein the step of determining a lattice reduction inverse includes the step of initialising a calculation matrix to an identity matrix and processing said calculation matrix in correspondence with processing of said lattice reduction step so as to mirror processing of a matrix representing the lattice reduction, so as to generate an inverse thereof.

3. A method in accordance with claim 2 wherein the step of processing said calculation matrix in correspondence with processing of said lattice reduction step comprises linear combination of rows in correspondence with linear combination of columns in the LLL algorithm, and/or swapping rows in correspondence with swapping columns in the LLL algorithm.

4. A method in accordance with any preceding claim and including, in each operation of the lattice reduction step in accordance with the LLL algorithm, determining a row-wise sum of a lattice reduction inverse by derivation from an initial condition or a previous operation of the lattice reduction step.

5. A method of decoding a received signal in a wireless communications system, the method comprising obtaining an estimate of channel response in said system, applying lattice reduction to said channel response and applying equalisation of said received signal in accordance with the reduced basis channel, the step of applying lattice reduction being in accordance with the LLL algorithm and including, in each operation of the lattice reduction step in accordance with the LLL algorithm, determining a row-wise sum of a lattice reduction inverse by derivation from an initial condition or a previous operation of the lattice reduction step.

6. A method in accordance with claim 4 or claim 5 wherein determining a row-wise sum of a lattice reduction inverse includes the step of initialising a calculation vector and processing said calculation vector in correspondence with processing of said lattice reduction step, said processed calculation vector thereby resulting in said row-wise sum.

7. A method in accordance with claim 6 wherein the step of processing said calculation vector in correspondence with processing of said lattice reduction step comprises linear combination of elements of said vector in correspondence with linear combination of columns in the LLL algorithm, and/or swapping elements of said calculation vector in correspondence with swapping columns in the LLL algorithm.

8. A method of determining soft estimates of transmitted bit values from a received signal in a lattice reduction aided receiver, the method comprising decoding said signal in accordance with any preceding claim and determining probabilities of transmitted bits having particular values.

9. Signal processing apparatus operable to decode a received signal at a receiver for use in a wireless communications system, comprising channel response estimating means for obtaining an estimate of channel response in said system, lattice reduction means for applying lattice reduction to said channel response, and equalisation means for applying equalisation of said received signal in accordance with the reduced basis channel, the lattice reduction means being operable in accordance with the LLL algorithm and including inverse determining means for determining, in each operation of the lattice reduction step in accordance with the LLL algorithm, a lattice reduction inverse by derivation from an initial condition or a previous operation of the lattice reduction means.

10. Apparatus in accordance with claim 9 wherein the inverse determining means includes matrix initialisation means for initialising a calculation matrix and wherein said inverse determining means is operable to process said calculation matrix in correspondence with said lattice reduction means so as to mirror processing of a matrix representing the lattice reduction, so as to generate an inverse thereof.

11. Apparatus in accordance with claim 10 wherein inverse determining means is operable to process said calculation matrix by linear combination of rows in correspondence with linear combination of columns in the LLL algorithm, and/or swapping rows in correspondence with swapping columns in the LLL algorithm.

12. Apparatus in accordance with any of claims 9 to 11 and including, in each operation of the lattice reduction means in accordance with the LLL algorithm, row-wise sum determining means for determining a row-wise sum of a lattice reduction inverse by derivation from an initial condition or a previous operation of the lattice reduction step.

13. Signal processing apparatus operable to decode a received signal in a wireless communications system, comprising channel response estimating means for obtaining an estimate of channel response in said system, lattice reduction means for applying lattice reduction to said channel response, and equalisation means for applying equalisation of said received signal in accordance with the reduced basis channel, the lattice reduction means being operable in accordance with the LLL algorithm and including row-wise sum determining means for determining, in each operation of the lattice reduction step in accordance with the LLL algorithm, a row-wise sum of a lattice reduction inverse by derivation from an initial condition or a previous operation of the lattice reduction step.

14. Apparatus in accordance with claim 12 or claim 13 wherein said row-wise sum determining means includes calculation vector initialising means and vector processing means for processing said calculation vector in correspondence with processing of said lattice reduction means, said processed calculation vector thereby resulting in said row-wise sum.

15. Apparatus in accordance with claim 14 wherein said calculation vector processing means is operable to process said calculation vector by linear combination of elements of said vector in correspondence with linear combination of columns in the LLL algorithm, and/or swapping elements of said calculation vector in correspondence with swapping columns in the LLL algorithm.

16. Apparatus for determining soft estimates of transmitted bit values from a received signal in a lattice reduction aided receiver, the apparatus comprising apparatus for decoding said signal in accordance with any of claims 9 to 15 and means for determining probabilities of transmitted bits having particular values.

17. A computer program product comprising computer executable instructions suitable to configure a general purpose computer to perform the method of any of claims 1 to 8.

18. A signal bearing computer executable instructions suitable to configure a general purpose computer to perform the method of any of claims 1 to 8.

Fig. 1

Fig. 2

Fig. 3

EP 1 879 341 A2

Fig. 4

Fig. 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- GB 0518036 A

### Non-patent literature cited in the description

- **H. YAO ; G.W. WORNELL.** Lattice-Reduction-Aided Detectors for MIMO Communication Systems. *Proc. IEEE Globecom,* November 2002, 424-428
- **C. WINDPASSINGER ; R. FISCHER.** Low-Complexity Near-Maximum-Likelihood Detection and Precoding for MIMO Systems using Lattice Reduction. *Proc. IEEE Information Theory Workshop,* March 2003, 346-348
- **I. BERENGUER ; J. ADEANE ; I. WASSELL ; X. WANG.** Lattice-Reduction-Aided Receivers for MIMO-OFDM in Spatial Multiplexing Systems. *Proc. Int. Symp. on Personal Indoor and Mobile Radio Communications,* September 2004, 1517-1521
- **D. WUBBEN ; R. BOHNKE ; V. KUHN ; K. KAMMEYER.** MMSE-Based Lattice-Reduction for Near-ML Detection of MIMO Systems. *Proc. ITG Workshop on Smart Antennas,* 2004
- **A. LENSTRA ; H. LENSTRA ; L. LOVASZ.** Factoring Polynomials with Rational Coefficients. *Math Ann.,* 1982, vol. 261, 515-534
- **L. LOVASZ.** An Algorithmic Theory of Numbers, Graphs and Convexity. *SIAM,* 1980
- **K. HIGUCHI ; H. KAWAI ; N. MAEDA ; M. SAWAHASHI.** Adaptive Selection of Surviving Symbol Replica Candidates Based on Maximum Reliability in QRM-MLD for OFCDM MIMO Multiplexing. *Proc. IEEE Globecom,* December 2004